# EUROPÄISCHE PATENTSCHRIFT

(11) **EP 4 438 265 B1**
(45) Veröffentlichungstag und Bekanntmachung des Hinweises auf die Patenterteilung: **10.12.2025**
(21) Anmeldenummer: 24161935.2
(22) Anmeldetag: 07.03.2024
(51) Int. Cl.: B29C 49/48, B29C 49/06, B29C 49/36, B29K 67/00, B29L 31/00

(54) **BLASSTATION UND BLASFORMMASCHINE UMFASSEND DIE BLASSTATION**
BLOWING STATION AND BLOW MOULDING MACHINE COMPRISING THE BLOWING STATION
STATION DE SOUFFLAGE ET MACHINE DE MOULAGE PAR SOUFFLAGE COMPRENANT LA STATION DE SOUFFLAGE

(30) Priorität: 30.03.2023 DE 102023108104
(43) Veröffentlichungstag der Anmeldung: 02.10.2024
(73) Patentinhaber: KHS GmbH, 44143 Dortmund (DE)
(72) Erfinder: Baumgarte, Rolf, 44143 Dortmund (DE); Klatt, Dieter, 44143 Dortmund (DE); Polzin, Christian, 44143 Dortmund (DE); Klein, Jan Fabian, 44143 Dortmund (DE)

(56) Entgegenhaltungen:
- EP-A1- 2 554 357
- DE-A1- 102014 019 722
- DE-A1- 4 212 584
- US-A1- 2011 052 747
- US-B1- 6 729 868

## Beschreibung

Die Erfindung betrifft eine Blasstation und eine Blasformmaschine umfassend die Blasstation.

Zur Herstellung von Behältern aus Kunststoff können zum Beispiel Blasformmaschinen verwendet werden, in denen Vorformlinge aus Kunststoff in Blasstationen zu Behältern umgeformt werden. Die Blasstationen weisen dabei Formen für die Umformung der Vorformlinge in die herzustellenden Behälter auf, wobei die Formen mindestens zwei Formhälften aufweisen können. Eine der Formhälften kann zur anderen Formhälfte schwenkbar sein, sodass die Form zum Einlegen eines Vorformlings bzw. zum Entnehmen eines Behälters geöffnet und zum Umformen eines Vorformlings zu einem Behälter geschlossen werden kann. Damit die Formhälften zueinander korrekt positioniert sind, können zum Beispiel Zentrierelemente verwendet werden. Weiter kann das Umformen durch das Einführen eines Fluids in den Vorformling unter einem großen Druck durchgeführt werden, zum Beispiel mit bis zu 40 bar Druckluft. Aus US 2011/052747 A1 beschreibt eine Vorrichtung zum Formen von Kunststoffbehältnissen mit einer Blasform, wobei die Blasform zumindest ein erstes und ein zweites Blasformteil aufweist, kann zumindest ein erstes und ein zweites Trägerelement zum Halten der Blasformteile umfassen. Die Trägerelemente sind zumindest in einer Ebene relativ zueinander beweglich, um zumindest von einer geschlossenen Konfiguration in eine geöffnete Konfiguration überführt zu werden. Dabei weisen die Trägerelemente jeweils einen Aufnahmebereich zur Aufnahme jeweils eines Blasformteils auf, wobei die Blasformteile in der geschlossenen Konfiguration zumindest einen Hohlraum zur Expansion der Behältnisse bilden. Die Blasformteile können magnetisch und lösbar miteinander koppelbar sein und/oder zumindest eines der Blasformteile ist magnetisch und lösbar mit zumindest einem Trägerelement koppelbar.

EP 2 554 357 A1 beschreibt ein Halbteil zum Formen eines Kunststoffbehälters, umfassend: eine Stütze und eine Halbform, die an der Stütze befestigt ist durch: einen ersten Satz hervorstehender Elemente, die in entsprechende Aufnahmen der Stütze geschraubt sind, um auf die Halbform zu schlagen; eine Halterung, die außerhalb der Stütze angebracht ist, und von der ein zweiter Satz hervorstehender Elemente abzweigt, so dass die Drehung der Halterung das Einsetzen der hervorstehenden Elemente in Durchgangshohlräume bewirkt, die in der Stütze ausgebildet sind, derart, dass sie auf die Halbform schlagen und diese blockieren; ein Klemmelement, um die Drehung der Halterung zu blockieren.

DE 10 2014 019 722 A1 beschreibt eine Umformungseinrichtung (1) zum Umformen von Kunststoffvorformlingen zu Kunststoffbehältnissen, mit einer Blasformeinrichtung, welche einen Hohlraum ausbildet, innerhalb dessen die Kunststoffvorformlinge durch Beaufschlagung mit einem fließfähigen Medium zu den Kunststoffbehältnissen umformbar sind, wobei die Blasformeinrichtung wenigstens zwei Seitenteile aufweist, welche zumindest mittelbar an Blasformträgern angeordnet sind, wobei an den Blasformträgern mittels einer Befestigungseinrichtung die Seitenteile angeordnet sind. Erfindungsgemäß weist die Befestigungseinrichtung auch ein Rückstellmittel auf, welches wenigstens zeitweise während eines Arbeitsbetriebs wenigstens ein Seitenteil in Richtung desjenigen Blasformträgers, an dem dieses Seitenteil angeordnet ist, drängt.

Um das Auseinanderdrücken der Formhälften zu vermeiden, ist aus DE 20 2004 011 785 U1 und DE 42 12 584 A1 bekannt, eine Formhälfte auf einem Druckkissen zu lagern, das diese Formhälfte während des Beaufschlagens des Vorformlings mit Druckluft gegen die andere Formhälfte drückt. Weiter können damit Toleranzen, Abweichungen und Verformungen zwischen den Formhälfte ausgeglichen werden.

Weiter ist aus US 6729868 B1 bekannt, einem Formträger mit einer in einem Elastomer gelagerten Buchse auszustatten. Die Formhälfte ist dabei über eine Schraube an der Buchse befestigt und damit schwimmend an dem Formträger gelagert.

Aufgabe der Erfindung ist es, eine Blasstation und eine Blasformmaschine bereitzustellen, die einfacher aufgebaut sind und weiter einen Ausgleich für Abweichungen, Toleranzen und Verformungen zwischen den Formhälften bereitstellen.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einer Blasstation zum Umformen eines Vorformlings zu einem Behälter für eine Blasformmaschine zum Herstellen von Kunststoff-Behältern, umfassend einen ersten Formträger, einen zweiten Formträger, einer an dem ersten Formträger gelagerten ersten Formhälfte und einer an dem zweiten Formträger gelagerten zweiten Formhälfte, wobei zumindest einer der Formträger schwenkbar gelagert ist und die Blasstation in einer ersten Schwenkposition des schwenkbar gelagerten Formträgers zum Einlegen eines Vorformlings in eine der Formhälften oder zum Entnehmen eines Behälters aus einer der Formhälften geöffnet ist und in einer zweiten Schwenkposition des schwenkbar gelagerten Formträgers, in der die zweite Formhälfte und die erste Formhälfte aneinander anliegen, geschlossen ist, wobei zumindest eine der Formhälften für den Wechsel in die zweite Schwenkposition bezüglich der jeweils anderen Formhälfte selbstausrichtend gelagert ist, ist erfindungsgemäß vorgesehen, dass der Formträger, an dem die selbstausrichtend gelagerte Formhälfte gelagert ist, ein Gleitlager für die selbstausrichtend gelagerte Formhälfte aufweist, wobei das Gleitlager radial beabstandet zu einer Zentralachse einer von den Formhälften ausgebildeten Form zwischen der selbstausrichtend gelagerten Formhälfte und dem Formträger, an dem die selbstausrichtend gelagerte Formhälfte gelagert ist, angeordnet ist, oder dass der Formträger, an dem die selbstausrichtend gelagerte Formhälfte gelagert ist, einen Elastomerkörper aufweist, an dem die selbstausrichtend gelagerte Formhälfte gelagert ist, wobei der Elastomerkörper an die selbstausrichtend gelagerte Formhälfte und den Formträger anvulkanisiert ist.

Die Erfindung stellt damit eine Blasstation bereit, bei der eine Selbstausrichtung zumindest einer Formhälfte beim Wechsel in die zweite Schwenkposition stattfindet. Eine aktive Ausrichtung der selbstausrichtend gelagerten Formhälfte mittels beispielsweise eines Druckkissens ist nicht weiter erforderlich. Wenn z. B. die zweite Formhälfte selbstausrichtend an dem zweiten Formträger gelagert ist, kann sie dazu derart an dem zweiten Formträger gelagert sein, dass beim Wechsel in die zweite Schwenkposition, z. B. aus der ersten Schwenkposition, eine Selbstausrichtung der zweiten Formhälfte in Bezug zur ersten Formhälfte stattfindet. Dabei wirkt die erste Formhälfte, die beispielsweise fest an dem ersten Formträger angebracht sein kann, als Bezugspunkt für die Ausrichtung der zweiten Formhälfte. Eine aktive Ausrichtung, zum Beispiel mittels eines Druckkissens ist nicht weiter erforderlich. Die Selbstausrichtung der zweiten Formhälfte erfolgt passiv und damit automatisch beim Wechsel in die zweite Schwenkposition. Durch das Selbstausrichten der selbstausrichtend gelagerten Formhälfte können Toleranzen, Abweichungen und Verformungen zwischen den beiden Formhälften ausgeglichen werden. Nähte an den hergestellten Behältern werden damit vermieden. Damit kann die Qualität der hergestellten Behälter erhöht werden. Weiter sinkt dadurch die Belastung auf Zentrierelemente, die eine Zentrierung der beiden Formhälften gegeneinander bewirken, sodass der Verschleiß dieser Zentrierelemente verringert wird.

An dem Gleitlager ist die selbstausrichtend gelagerte Formhälfte an diesem Formträger gelagert. Wenn z. B. die zweite Formhälfte die selbstausrichtend gelagerte Formhälfte ist, kann sie auf dem Gleitlager gleiten und sich relativ zur ersten Formhälfte drehen und sich auf diese Weise beim Wechsel in die zweite Schwenkposition selbst ausrichten. Die Drehachse für die relative Drehung kann dazu zwischen der ersten Formhälfte und der zweiten Formhälfte angeordnet sein, wenn die zweite Formhälfte in der zweiten Schwenkposition ist, d. h. wenn die Form bzw. die Blasstation geschlossen ist. Das Gleitlager kann flexibel an der zweiten Formhälfte angeordnet sein. So ist das Gleitlager zum Beispiel radial beabstandet zu einer Zentralachse der Form zwischen der zweiten Formhälfte und dem zweiten Formträger angeordnet. Alternativ oder zusätzlich kann das Gleitlager auch in axialer Richtung zwischen der zweiten Formhälfte und dem zweiten Formträger angeordnet sein.

In einem Beispiel kann alternativ oder zusätzlich auch die erste Formhälfte selbstausrichtend an dem ersten Formträger gelagert sein. Die oben angeführten Erläuterungen gelten dann analog für die erste Formhälfte.

Gemäß einem Beispiel kann die Blasstation druckkissenlos und/oder pancakezylinderlos ausgebildet sein.

Durch das Weglassen des Druckkissens bzw. des Pancake-Zylinders vereinfacht sich der Aufbau der Blasstation und wird kostengünstiger. Aufgrund der automatisch erfolgenden Ausrichtung der selbstausrichtend gelagerten Formhälfte können dennoch Behälter mit verbesserter Qualität hergestellt werden.

Gemäß einem weiteren Beispiel kann das Gleitlager eine Gleitlagerfolie aufweisen.

Mit einer Gleitlagerfolie kann auf einfache und kostengünstige Weise ein Gleitlager für die zweite Formhälfte bereitgestellt werden.

In einem weiteren Beispiel kann die selbstausrichtend gelagerte Formhälfte mit flexiblen Verbindungselementen, insbesondere einer Ultrabuchse, an dem Formträger befestigt sein, an dem sie gelagert ist.

Mit den flexiblen Verbindungselementen wird damit eine Verbindung zwischen dem die selbstausrichtend gelagerte Formhälfte tragenden Formträger und der Formhälfte bereitgestellt, die ein Gleiten und Drehen der selbstausrichtend gelagerten Formhälfte relativ zum Formträger, an dem sie gelagert ist, und relativ zur anderen Formhälfte erlaubt.

Die selbstausrichtend gelagerte Formhälfte kann zum Beispiel mit federnden Verbindungselementen an dem Formträger befestigt sein, an dem sie gelagert ist.

Die federnden Verbindungselemente können alternativ oder zusätzlich zu den flexiblen Verbindungselementen vorgesehen werden. Auch mit den federnden Verbindungselementen wird eine Verbindung zwischen dem Formträger, an dem die selbstausrichtend gelagerte Formhälfte gelagert ist und der selbstausrichtend gelagerten Formhälfte bereitgestellt, die ein Gleiten und Drehen der selbstausrichtend gelagerten Formhälfte relativ zum Formträger und relativ zur anderen Formhälfte erlaubt.

Es ist weiter denkbar, dass der Elastomerkörper als ein Gummikissen ausgebildet sein kann.

Das Gummi weist vorzugsweise eine geringe Härte auf.

Gemäß einem weiteren Beispiel kann der Elastomerkörper zum größten Teil allseitig begrenzt sein.

Der Elastomerkörper kann sich in diesem Beispiel nicht über die Begrenzungen ausdehnen, sodass das Verhalten des Elastomerkörpers mit der Ausdehnung der Begrenzungen um den Elastomerkörper eingestellt werden kann.

Weiter kann der Elastomerkörper beispielsweise derart ausgebildet sein, dass er ein Verhalten wie eine inkompressible hydraulische Flüssigkeit aufweist.

Durch dieses Verhalten kann der Formträger, an dem die selbstausrichtend gelagerte Formhälfte gelagert ist, weiter einen Druck auf die selbstausrichtend gelagerte Formhälfte ausüben, um die selbstausrichtend gelagerte Formhälfte in der zweiten Schwenkposition auf die andere Formhälfte zu drücken. Gleichzeitig ermöglicht der Elastomerkörper weiter eine automatische Ausrichtung der selbstausrichtend gelagerten Formhälfte beim Wechsel in die zweite Schwenkposition. Dieses Verhalten kann beispielsweise mittels der oben erläuterten Begrenzung eingestellt werden.

Weiter betrifft die Erfindung eine Blasformmaschine zum Herstellen von Kunststoff-Behältern umfassend ein Blasrad und eine Vielzahl von Blasstationen nach der vorangegangenen Beschreibung, wobei die Blasstationen an dem Umfang eines Blasrades, vorzugsweise äquidistant, verteilt angeordnet sind.

Vorteile und Wirkungen sowie Weiterbildungen der Blasformmaschine ergeben sich aus den Vorteilen und Wirkungen sowie Weiterbildungen der oben beschriebenen Blasstation. Zur Vermeidung von Wiederholungen wird daher in dieser Hinsicht auf die vorangegangene Beschreibung verwiesen.

Die Erfindung betrifft weiter eine Anlage zum Herstellen von Behältern, die zumindest eine Vorrichtung zur thermischen Konditionierung der Vorformlinge, zumindest eine Transportvorrichtung und zumindest eine Blasformmaschine gemäß der oben angeführten Beschreibung aufweist, wobei die Transportvorrichtung die thermisch konditionieren Vorformlinge aus der Vorrichtung entnimmt und der Blasformmaschine zuführt.

Im Folgenden wird die Erfindung anhand beispielhafter Ausführungsformen mittels der beigefügten Zeichnung beschrieben. Es zeigen:
- Figur 1a, b: eine schematische Darstellung einer Blasstation gemäß einem ersten Beispiel im Längsschnitt (a) und in der Draufsicht (b);
- Figur 2a, b: eine schematische Darstellung einer Blasstation gemäß einem zweiten Beispiel im Längsschnitt (a) und im Querschnitt (b); und
- Figur 3: eine schematische Darstellung einer Anlage zum Herstellen von Behältern.

Die Blasstation zum Umformen eines Vorformlings zu einem Behälter für eine Blasmaschine zum Herstellen von Kunststoff-Behältern wird im Folgenden in ihrer Gesamtheit mit dem Bezugszeichen 10 bezeichnet.

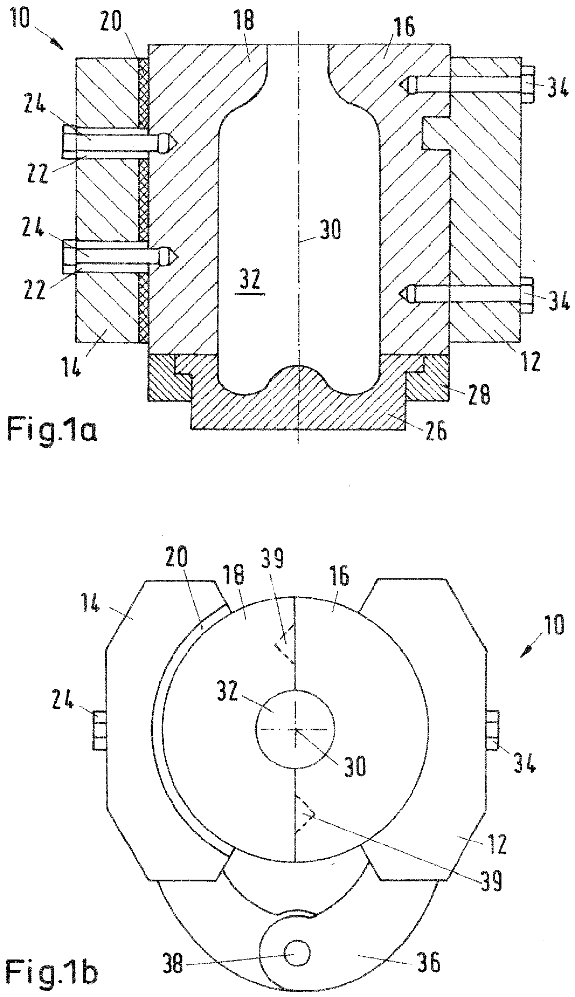

Wie in Figur 1a dargestellt weist die Blasstation 10 einen ersten Formträger 12 und einen zweiten Formträger 14 auf, die Teile einer Form 32 für den zu formenden Behälter tragen. Die Form 32 weist mindestens eine erste Formhälfte 16 und eine zweite Formhälfte 18 auf. Die Form 32 kann weiter Formteile, z. B. eine Bodenform 26, aufweisen. Die erste Formhälfte 16 kann mittels Verbindungselementen 34, insbesondere Schrauben, fest mit dem ersten Formträger 12 verbunden und an diesem gelagert sein. Damit sei jedoch nicht ausgeschlossen, dass die erste Formhälfte 16 beweglich an dem ersten Formträger 16 gelagert sein kann. Die zweite Formhälfte 18 ist an dem zweiten Formträger 14 gelagert.

Wie in Figur 1b dargestellt, ist der zweite Formträger 14 schwenkbar in Bezug auf den ersten Formträger 12 gelagert. Dazu kann ein Gelenk 36 den ersten Formträger 12 mit den zweiten Formträger 14 verbinden, wobei das Gelenk 36 eine Schwenkachse 38 aufweist. Der zweite Formträger 14 und damit auch die zweite Formhälfte 18 können daher in Bezug auf dem ersten Formträger 12 bzw. die erste Formhälfte 16 um die Schwenkachse 38 geschwenkt werden. Damit sei jedoch nicht ausgeschlossen, dass auch der erste Formträger 12 schwenkbar ausgebildet sein kann.

Die Form 32 kann in diesem Beispiel mittels einer Schwenkbewegung des zweiten Formträgers 14 geöffnet und geschlossen werden. Im geöffneten Zustand ist die Blasstation 10 in einer ersten Schwenkposition, in der ein Vorformling in die erste Formhälfte 16 eingelegt werden kann oder ein Behälter aus der ersten Formhälfte 16 entnommen werden kann.

Im geschlossenen Zustand ist die Blasstation 10 in einer zweiten Schwenkposition, in der die zweite Formhälfte 18 an der ersten Formhälfte 16 anliegt, sodass zumindest ein Teil der Form 32 des herzustellenden Behälters gebildet wird. Für eine Zentrierung der zweiten Formhälfte 18 an der ersten Formhälfte 16 können Zentrierelemente 39 an den beiden Formhälften 16, 18 vorgesehen werden.

Die Lagerung der zweiten Formhälfte 18 ist derart ausgebildet, dass die zweite Formhälfte 18 selbstausrichtend ist, wenn die Blasstation 10 in die zweite Schwenkposition, z. B. aus der ersten Schwenkposition, wechselt. Die zweite Formhälfte 18 kann daher beim Anlegen an die erste Formhälfte 16 automatisch ausgerichtet werden. Ein Druckkissen oder ein Pancake-Zylinder sind dazu nicht weiter erforderlich.

In dem Beispiel gemäß der Figuren 1a und 1b ist die zweite Formhälfte 18 auf einem Gleitlager 20 an dem zweiten Formträger 14 gelagert. Die zweite Formhälfte 18 kann daher zumindest entlang der Zentralachse 30 des herzustellenden Behälters in axialer Richtung und in Umfangsrichtung um die Zentralachse 30 bewegt werden. Auf diese Weise können Abweichungen, Toleranzen und Verformungen ausgeglichen werden.

Das Gleitlager 20 kann als eine Gleitlagerfolie ausgebildet sein, die auf einer zur zweiten Formhälfte 18 weisenden Fläche des zweiten Formträgers 14 befestigt sein kann.

Weiter kann der zweite Formträger 14 Verbindungselemente 24 aufweisen, die flexibel sind und mit denen die zweite Formhälfte 18 an dem zweiten Formträger 14 befestigt sein kann. Alternativ oder zusätzlich kann der zweite Formträger 14 Ultrabuchsen 22 aufweisen, in denen Verbindungselemente 24 zum Befestigen der zweiten Formhälfte 18 an dem zweiten Formträger 14 gelagert sein können. Die Verbindungselemente 24 können in den Ultrabuchsen 22 in Bezug zum zweiten Formträger 14 beweglich gelagert sein. Dann können die Verbindungselemente 24 beispielsweise starr ausgebildet sein.

Die Form 32 der Blasstation 10 kann weiter einen Ringträger 28 für die Bodenform 26 aufweisen. Die Bodenform 26 kann im Ringträger 28 gelagert sein und mit den beiden Formhälften 16, 18 die Form 32 für den herzustellenden Behälter bilden. Damit sei jedoch nicht ausgeschlossen, dass die Form 32 weitere Formteile zum Formen von Bereichen des herzustellenden Behälters aufweisen kann.

Falls alternativ oder zusätzlich die erste Formhälfte 16 selbstausrichtend an der ersten Formhälfte 12 gelagert ist, gelten die obigen Erläuterungen zu der zweiten Formhälfte 18 und dem zweiten Formträger 14 analog für die erste Formhälfte 16 und den ersten Formträger 12.

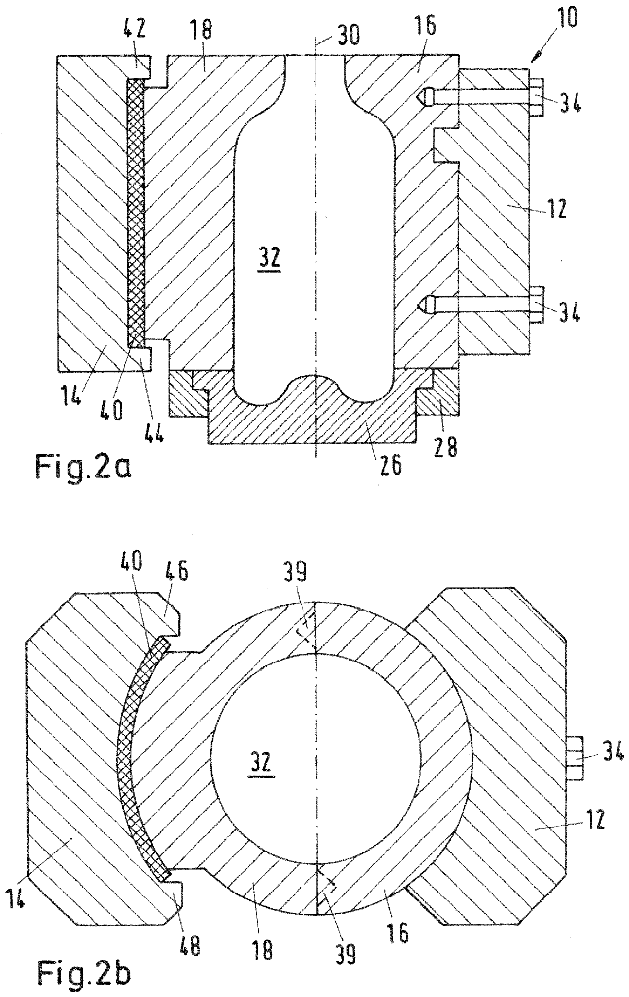

In den Figuren 2a und 2b ist ein alternatives Beispiel der Erfindung dargestellt. Elemente, die in dem Beispiel nach den Figuren 1a und 1b bereits beschrieben wurden, weisen in den Figuren 2a und 2b die gleichen Bezugsziffern auf. Der Schwenkmechanismus 36, 38 aus Figur 1a und 1b ist in diesem Beispiel weggelassen, kann jedoch selbstverständlich ebenfalls vorgesehen werden.

Anstelle des Gleitlagers 20 aus Figur 1a und 1b, weist die Blasstation 10 in diesem Beispiel einen Elastomerkörper 40 auf, auf dem die zweite Formhälfte 18 an dem zweiten Formträger 14 gelagert ist. Der Elastomerkörper 40 kann als Gummikissen ausgebildet sein. Weiter ist der Elastomerkörper 40 zum Beispiel sowohl an die zweite Formhälfte 18 als auch an den zweiten Formträger 14 anvulkanisiert und befestigt damit zweite Formhälfte 18 an dem zweiten Formträger 14.

Der zweite Formträger 14 kann gemäß Figur 2a weiter eine obere Begrenzung 42 und eine untere Begrenzung 44 für den Elastomerkörper 40 aufweisen. Weiter kann der zweite Formträger 14 gemäß Figur 2b auch eine erste seitliche Begrenzung 46 und eine zweite seitliche Begrenzung 48 aufweisen, die an gegenüberliegenden Seiten des Elastomerkörpers 40 angeordnet sind. Der Elastomerkörper 40 wird insbesondere in der zweiten Schwenkposition weiter durch die zweite Formhälfte 18 und den zweiten Formträger 14 begrenzt. Wie aus den Figuren 2a und 2b ersichtlich, ist der Elastomerkörper 40 damit nahezu allseitig begrenzt.

Bei elastischen Bewegungen des Elastomerkörpers 40 wird das Material des Elastomerkörpers 40 durch die Begrenzungen 42 - 48 formschlüssige begrenzt. Daher kann das Material des Elastomerkörpers 40 in der zweiten Schwenkposition, wenn überhaupt, lediglich in sehr begrenztem Maß aus seiner ursprünglichen Gestalt ausweichen, sodass der Elastomerkörper 40 ein Verhalten wie eine inkompressible hydraulische Flüssigkeit aufweisen kann.

Die zweite Formhälfte 18 ist in diesem Beispiel daher derart gelagert, als ob sie auf einer inkompressiblen hydraulischen Flüssigkeit schwimmen würde. Beim Wechsel in die zweite Schwenkposition kann die zweite Formhälfte daher Abweichungen, Toleranzen und Verformungen der beiden Formhälften 16, 18 ausgleichen.

Der Elastomerkörper 40 kann beispielsweise als Gummikissen ausgebildet sein. Das Gummimaterial kann eine geringe Härte von 10 bis 100 Shore A, bevorzugt 30 bis 60 Shore A, aufweisen.

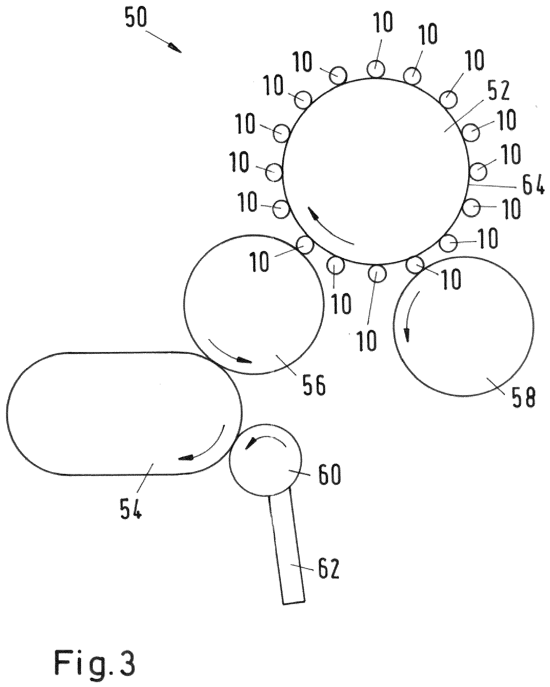

In Figur 3 ist eine Anlage 50 zum Herstellen von Behältern dargestellt. Die Anlage 50 weist zumindest eine Vorrichtung 54 zur thermischen Konditionierung von Vorformlingen, zumindest eine Transportvorrichtung 56 und zumindest eine Blasformmaschine 52 auf.

Die Blasformmaschine 52 weist eine Vielzahl von Blasstationen 10 auf, von denen mindestens eine gemäß der vorangegangenen Beschreibung ausgebildet ist. Die Blasstationen 10 sind entlang eines Umfangs eines Blasrads 64 angeordnet. Dabei können die Blasstationen 10 äquidistant zueinander positioniert sein. Durch eine Drehung des Blasrads 64 können die Blasstationen 10 nacheinander an der Transportvorrichtung 56 vorbeitransportiert werden und wechseln nacheinander abwechselnd je nach Winkelstellung der betreffenden Blasstation 10 zwischen der ersten und zweiten Schwenkposition.

Die Anlage 50 kann weiter eine Zufuhrvorrichtung 62 für Vorformlinge mit einem Zufuhrrad 60 aufweisen. Das Zufuhrrad 60 kann die Vorformlinge aus der Zufuhrvorrichtung 62 der Vorrichtung 54 zuführen, in der die Vorformlinge für das Umformen in der Blasformmaschine 52 thermisch konditioniert werden können. Die Transportvorrichtung 56 kann die thermisch konditionierten Vorformlinge aus der Vorrichtung 54 aufnehmen und in die an der Übergabeposition angeordneten Blasstationen 10 der Blasformmaschinen 52 einlegen. Dazu sind die Blasstationen 10 an der Übergabeposition der Transportvorrichtung 56 in der ersten Schwenkposition. Die Vorformlinge können dann in die erste Formhälfte 16 eingelegt werden.

Die Blasstationen 10 werden durch eine Drehung des Blasrads 64 der Blasformmaschine 52 kontinuierlich in Pfeilrichtung transportiert und wechseln dabei in die zweite Schwenkposition. Bei dem Wechsel können die selbstausrichtend gelagerten zweiten Formhälften 18 der Blasstationen 10 automatisch Abweichungen, Toleranzen und Verformungen ausgleichen.

Wenn die Blasstationen 10 in der zweiten Schwenkposition sind, werden die Vorformlinge zu Behältern umgeformt. Dies kann mit einem Blasgas oder mit einer Flüssigkeit durchgeführt werden und erfolgt während der Drehung des Blasrads 64.

Nach dem Formen der Behälter werden die Blasstationen 10 wieder in die erste Schwenkposition überführt und gelange durch die Drehung des Blasrads 64 an eine weitere Übergabeposition. Eine weitere Transportvorrichtung 58 kann dort die hergestellten Behälter aus den geöffneten Blasstationen 10 entnehmen. Die Behälter können dazu aus der ersten Formhälfte 16 entnommen werden.

Die Blasstation 10 kann optional in allen hier erläuterten beispielhaften Ausführungsformen weiter mindestens ein in den Figuren nicht dargestelltes Element aus der folgenden Gruppe aufweisen: einen Antrieb zum Schwenken des zweiten Formträgers 14, einen Verschlussmechanismus zum Arretieren der zweiten Formhälfte 18 an der ersten Formhälfte 16 in der zweiten Schwenkposition sowie weitere Komponenten für den Betrieb der Blasstation 10 aufweisen.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Blasstation
- 12: erster Formträger
- 14: zweiter Formträger
- 16: erste Formhälfte
- 18: zweite Formhälfte
- 20: Gleitlager
- 22: Ultrabuchse
- 24: Verbindungselement
- 26: Bodenform
- 28: Ringträger
- 30: Zentralachse
- 32: Form
- 34: Verbindungselement
- 36: Gelenk
- 38: Schwenkachse
- 39: Zentrierelement
- 40: Elastomerkörper
- 42: obere Begrenzung
- 44: untere Begrenzung
- 46: erste seitliche Begrenzung
- 48: zweite seitliche Begrenzung
- 50: Anlage
- 52: Blasformmaschine
- 54: Vorrichtung zur thermischen Konditionierung von Vorformlingen
- 56: Transportvorrichtung
- 58: Transportvorrichtung
- 60: Zufuhrrad
- 62: Zufuhrvorrichtung
- 64: Blasrad

## Patentansprüche

1. Blasstation (10) zum Umformen eines Vorformlings zu einem Behälter für eine Blasformmaschine (52) zum Herstellen von Kunststoff-Behältern, umfassend einen ersten Formträger (12), einen zweiten Formträger (14), einer an dem ersten Formträger (12) gelagerten ersten Formhälfte (16) und einer an dem zweiten Formträger (14) gelagerten zweiten Formhälfte (18), wobei zumindest einer der Formträger (12, 14) schwenkbar gelagert ist und die Blasstation (10) in einer ersten Schwenkposition des schwenkbar gelagerten Formträgers (12, 14) zum Einlegen eines Vorformlings in eine der Formhälften (16, 18) oder zum Entnehmen eines Behälters aus einer der Formhälften (16, 18) geöffnet ist und in einer zweiten Schwenkposition des schwenkbar gelagerten Formträgers (12, 14), in der die zweite Formhälfte (18) und die erste Formhälfte (16) aneinander anliegen, geschlossen ist, wobei zumindest eine der Formhälften (16, 18) für den Wechsel in die zweite Schwenkposition bezüglich der jeweils anderen Formhälfte (16, 18) selbstausrichtend gelagert ist, **dadurch gekennzeichnet, dass** der Formträger (12, 14), an dem die selbstausrichtend gelagerte Formhälfte gelagert ist, ein Gleitlager (20) für die selbstausrichtend gelagerte Formhälfte (16, 18) aufweist, wobei das Gleitlager radial beabstandet zu einer Zentralachse einer von den Formhälften (16, 18) ausgebildeten Form zwischen der selbstausrichtend gelagerten Formhälfte (16, 18) und dem Formträger (12, 14), an dem die selbstausrichtend gelagerte Formhälfte gelagert ist, angeordnet ist, oder dass der Formträger (12, 14), an dem die selbstausrichtend gelagerte Formhälfte (16, 18) gelagert ist, einen Elastomerkörper (40) aufweist, an dem die selbstausrichtend gelagerte Formhälfte (16, 18) gelagert ist, wobei der Elastomerkörper (40) an die selbstausrichtend gelagerte Formhälfte (16, 18) und den Formträger (12, 14) anvulkanisiert ist.

2. Blasstation (10) nach Anspruch 1, **dadurch gekennzeichnet, dass** die Blasstation (10) druckkissenlos und/oder pancakezylinderlos ausgebildet ist.

3. Blasstation (10) nach Anspruch 1 oder 2, **dadurch gekennzeichnet, dass** das Gleitlager (20) eine Gleitlagerfolie aufweist.

4. Blasstation (10) nach einem der vorangegangenen Ansprüche, **dadurch gekennzeichnet, dass**, wenn der Formträger (12, 14) das Gleitlager (20) aufweist, die selbstausrichtend gelagerte Formhälfte (16, 18) mit flexiblen Verbindungselementen (22), insbesondere einer Ultrabuchse, an dem Formträger (12, 14) befestigt ist, an dem sie gelagert ist.

5. Blasstation (10) nach einem der vorangegangenen Ansprüche, **dadurch gekennzeichnet, dass**, wenn der Formträger (12, 14) das Gleitlager (20) aufweist, die selbstausrichtend gelagerte Formhälfte (16, 18) mit federnden Verbindungselementen (24) an dem Formträger (12, 14) befestigt ist, an dem sie gelagert ist.

6. Blasstation (10) nach einem der vorangegangenen Ansprüche, **dadurch gekennzeichnet, dass**, wenn der Formträger (12, 14) den Elastomerkörper (40) aufweist, der Elastomerkörper (40)als ein Gummikissen ausgebildet ist.

7. Blasstation (10) nach einem der vorangegangenen Ansprüche, **dadurch gekennzeichnet, dass**, wenn der Formträger (12, 14) den Elastomerkörper (40) aufweist, der Elastomerkörper (40) zum größten Teil allseitig begrenzt ist.

8. Blasstation (10) nach einem der vorangegangenen Ansprüche, **dadurch gekennzeichnet, dass**, wenn der Formträger (12, 14) den Elastomerkörper (40) aufweist, der Elastomerkörper (40) derart ausgebildet ist, dass er ein Verhalten wie eine inkompressible hydraulische Flüssigkeit aufweist.

9. Blasformmaschine (52) zum Herstellen von Kunststoff-Behältern umfassend ein Blasrad und eine Vielzahl von Blasstationen (10) nach einem der vorangegangenen Ansprüche, wobei die Blasstationen (10) an dem Umfang eines Blasrades (64), vorzugsweise äquidistant, verteilt angeordnet sind.

10. Anlage zum Herstellen von Behältern, die zumindest eine Vorrichtung (54) zur thermischen Konditionierung der Vorformlinge, zumindest eine Transportvorrichtung (56) und zumindest eine Blasformmaschine (52) nach Anspruch 9 aufweist, wobei die Transportvorrichtung (56) die thermisch konditionieren Vorformlinge aus der Vorrichtung (54) entnimmt und der Blasformmaschine (52) zuführt.

## Claims

1. Blowing station (10) for transforming a preform into a container for a blow moulding machine (52) for producing plastic containers, comprising a first mould carrier (12), a second mould carrier (14), a first mould half (16) mounted on the first mould carrier (12) and a second mould half (18) mounted on the second mould carrier (14), wherein at least one of the mould carriers (12, 14) is pivotably mounted and the blowing station (10) with the pivotably mounted mould carrier (12, 14) in a first pivotal position is opened in order to insert a preform into one of the mould halves (16, 18) or to remove a container from one of the mould halves (16, 18), and with the pivotably mounted mould carrier (12, 14) in a second swivel position in which the second mould half (18) and the first mould half (16) rest against each other, is closed, at least one of the mould halves (16, 18) being mounted in a self-aligning manner with respect to the respective other mould half (16, 18) in order to change to the second swivel position, **characterised in that** the mould carrier (12, 14) on which the self-aligning mould half is mounted has a plain bearing (20) for the self-aligning mould half (16, 18), the plain bearing being radially spaced from a central axis of a mould formed by the mould halves (16, 18) between the self-aligning mould half (16, 18) and the mould carrier (12, 14) on which the self-aligning mould half is mounted, or that the mould carrier (12, 14) on which the self-aligning mould half (16, 18) is mounted has an elastomer body (40) on which the self-aligning mould half (16, 18) is mounted, the elastomer body (40) being vulcanised onto the self-aligning mould half (16, 18) and the mould carrier (12, 14).

2. Blowing station (10) according to claim 1, **characterised in that** the blowing station (10) is designed without pressure pads and/or pancake cylinders.

3. Blowing station (10) according to claim 1 or 2, **characterised in that** the plain bearing (20) has a plain bearing film.

4. Blowing station (10) according to any of the preceding claims, **characterised in that**, if the mould carrier (12, 14) has the plain bearing (20), the self-aligning mould half (16, 18) is attached to the mould carrier (12, 14) on which it is mounted by means of flexible connecting elements (22), in particular an ultra bush.

5. Blowing station (10) according to any of the preceding claims, **characterised in that**, if the mould carrier (12, 14) has the plain bearing (20), the self-aligning mould half (16, 18) is attached to the mould carrier (12, 14) on which it is mounted by means of resilient connecting elements (24).

6. Blowing station (10) according to any of the preceding claims, **characterised in that**, if the mould carrier (12, 14) has the elastomer body (40), the elastomer body (40) is designed as a rubber cushion.

7. Blowing station (10) according to any of the preceding claims, **characterised in that**, if the mould carrier (12, 14) has the elastomer body (40), the elastomer body (40) is largely confined on all sides.

8. Blowing station (10) according to any of the preceding claims, **characterised in that**, if the mould carrier (12, 14) has the elastomer body (40), the elastomer body (40) is designed such that it behaves like an incompressible hydraulic fluid.

9. Blow moulding machine (52) for producing plastic containers, comprising a blowing wheel and a plurality of blowing stations (10) according to any of the preceding claims, wherein the blowing stations (10) are arranged distributed around the circumference of a blowing wheel (64), preferably equidistantly.

10. Plant for producing containers, which has at least one device (54) for thermal treatment of the preforms, at least one transport device (56) and at least one blow moulding machine (52) according to claim 9, wherein the transport device (56) removes the thermally treated preforms from the device (54) and feeds them to the blow moulding machine (52).

## Revendications

1. Station de soufflage (10) pour la transformation d'une préforme en un récipient pour une machine de moulage par soufflage (52) pour la fabrication de récipients en plastique, comprenant un premier support de moule (12), un deuxième support de moule (14), un premier demi-moule (16) monté sur le premier support de moule (12) et un deuxième demi-moule (18) monté sur le deuxième support de moule (14), dans laquelle au moins l'un des supports de moule (12, 14) est monté pivotant et la station de soufflage (10) dans une première position de pivotement du support de moule (12, 14) monté pivotant pour l'insertion d'une préforme dans l'un des demi-moules (16, 18) ou pour le retrait d'un récipient de l'un des demi-moules (16, 18) est ouverte et dans une deuxième position de pivotement du support de moule (12, 14) monté pivotant, dans laquelle le deuxième demi-moule (18) et le premier demi-moule (16) sont en contact l'un avec l'autre, est fermée, dans laquelle au moins l'un des demi-moules (16, 18) pour le passage dans la deuxième position de pivotement est monté de manière auto-alignante par rapport à l'autre demi-moule (16, 18), **caractérisée en ce que** le support de moule (12, 14), sur lequel est monté le demi-moule monté de manière auto-alignante, présente un palier lisse (20) pour le demi-moule (16, 18) monté de manière auto-alignante, dans laquelle le palier lisse est disposé de manière radialement espacée d'un axe central d'un moule réalisé par les demi-moules (16, 18) entre le demi-moule (16, 18) monté de manière auto-alignante et le support de moule (12, 14) sur lequel est monté le demi-moule monté de manière auto-alignante, ou que le support de moule (12, 14) sur lequel est monté le demi-moule (16, 18) monté de manière auto-alignante présente un corps élastomère (40) sur lequel est monté le demi-moule (16, 18) monté de manière auto-alignante, dans laquelle le corps élastomère (40) est vulcanisé sur le demi-moule (16, 18) monté de manière auto-alignante et le support de moule (12, 14).

2. Station de soufflage (10) selon la revendication 1, **caractérisée en ce que** la station de soufflage (10) est réalisée sans coussin de pression et/ou sans cylindre pancake.

3. Station de soufflage (10) selon la revendication 1 ou 2, **caractérisée en ce que** le palier lisse (20) présente un film de palier lisse.

4. Station de soufflage (10) selon l'une quelconque des revendications précédentes, **caractérisée en ce que** lorsque le support de moule (12, 14) présente le palier lisse (20), le demi-moule (16, 18) monté de manière auto-alignante est fixé avec des éléments de liaison flexibles (22), en particulier une douille caoutchouc-métal, au support de moule (12, 14) sur lequel il est monté.

5. Station de soufflage (10) selon l'une quelconque des revendications précédentes, **caractérisée en ce que**, lorsque le support de moule (12, 14) présente le palier lisse (20), le demi-moule (16, 18) monté de manière auto-alignante est fixé avec des éléments de liaison élastiques (24) au support de moule (12, 14) sur lequel il est monté.

6. Station de soufflage (10) selon l'une quelconque des revendications précédentes, **caractérisée en ce que**, lorsque le support de moule (12, 14) présente le corps élastomère (40), le corps élastomère (40) est réalisé sous la forme d'un coussin en caoutchouc.

7. Station de soufflage (10) selon l'une quelconque des revendications précédentes, **caractérisée en ce que**, lorsque le support de moule (12, 14) présente le corps élastomère (40), le corps élastomère (40) est en grande partie délimité sur tous les côtés.

8. Station de soufflage (10) selon l'une quelconque des revendications précédentes, **caractérisée en ce que**, lorsque le support de moule (12, 14) présente le corps élastomère (40), le corps élastomère (40) est réalisé de telle sorte qu'il présente un comportement tel qu'un liquide hydraulique incompressible.

9. Machine de moulage par soufflage (52) pour la fabrication de récipients en plastique comprenant une roue de soufflage et une pluralité de stations de soufflage (10) selon l'une quelconque des revendications précédentes, dans laquelle les stations de soufflage (10) sont disposées de manière répartie sur la circonférence d'une roue de soufflage (64), de préférence à équidistance.

10. Installation de fabrication de récipients qui présente au moins un dispositif (54) de conditionnement thermique des préformes, au moins un dispositif de transport (56) et au moins une machine de moulage par soufflage (52) selon la revendication 9, dans laquelle le dispositif de transport (56) retire les préformes thermiquement conditionnées du dispositif (54) et les amène à la machine de moulage par soufflage (52).
